(19) Europäisches Patentamt
European Patent Office
Office européen des brevets

(11) **EP 4 394 955 A2**

(12) **EUROPEAN PATENT APPLICATION**

(43) Date of publication:
**03.07.2024 Bulletin 2024/27**

(21) Application number: **23220624.3**

(22) Date of filing: **28.12.2023**

(51) International Patent Classification (IPC):
*H01M 8/00* (2016.01)    *H01M 8/0228* (2016.01)
*H01M 8/0276* (2016.01)    *H01M 8/0284* (2016.01)
*H01M 8/0286* (2016.01)    *H01M 8/18* (2006.01)
*H01M 8/242* (2016.01)

(52) Cooperative Patent Classification (CPC):
**H01M 8/006; H01M 8/0228; H01M 8/0278;
H01M 8/0284; H01M 8/0286; H01M 8/188;
H01M 8/242**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 KR 20220190750
26.12.2023 KR 20230191889**

(71) Applicant: **Standard Energy Inc.
Yuseong-gu, Daejeon 34014 (KR)**

(72) Inventors:
• **LEE, Dong-Young
34014 Daejeon (KR)**
• **KIM, Dong-Heun
34014 Daejeon (KR)**

(74) Representative: **Vossius & Partner
Patentanwälte Rechtsanwälte mbB
Siebertstrasse 3
81675 München (DE)**

(54) **ADHESIVE FOR SECONDARY BATTERY**

(57)    Disclosed is an adhesive for a secondary battery. More specifically, disclosed is an adhesive for a secondary battery that replaces a gasket used when assembling a cell module of the secondary battery.

FIG. 1

EP 4 394 955 A2

**Description**

**CROSS-REFERENCE TO RELATED APPLICATION**

This application claims priority from Korean Patent Application No. 10-2022-0190750 filed on December 30, 2022 and Korean Patent Application No. 10-2023-0191889 filed on December 26, 2023 in the Korean Intellectual Property Office, the contents of which in its entirety are herein incorporated by reference.

**BACKGROUND**

**Field**

The present disclosure relates to an adhesive for a secondary battery, and more specifically, to an adhesive for a secondary battery that may replace a gasket used when assembling a cell module of the secondary battery.

**Description of Related Art**

Unlike conventional secondary batteries, a redox flow battery (RFB) has a system in which an active material in electrolyte is oxidized and reduced to charge and discharge the battery and refers to an electrochemical storage device that stores electrical energy therein in a form of chemical energy of the electrolyte. In the redox flow battery, actual electrochemical reaction occurs in a stack. RFB operates by continuously circulating the electrolyte into the stack using a fluid pump. While this redox flow battery has the advantages of long lifespan, high output, and high capacity, the RFB has space constraints and design difficulty due to the tank that stores therein the electrolyte and the fluid pump to flow the electrolyte. Accordingly, the inventors of the present disclosure developed a redox secondary battery in which the electrolyte tank and the fluid pump are absent. However, this developed redox secondary battery had low energy density and large volume.

In order to assemble a cell module of the redox secondary battery, elements such as a current collector, a frame, and a separator that constitute the cell module are combined with each other, and a gasket with adhesiveness and airtightness is used to prevent electrolyte leakage.

In particular, it is necessary to stably maintain the airtightness and adhesion of an electrode assembly even in repeated charging and discharging of the battery and under an operating environment under high pressure condition by bond the current collector to the frame. In order to bond the current collector to the frame, a scheme of applying a high pressure of 7,000N or higher using a gasket between the frame and the current collector has been applied.

However, due to a volume of the gasket itself, the volume of the cell module increases, which is disadvantageous. When using the gasket, the high pressure is required, which is disadvantageous in terms of a process. It is difficult to prevent micro-leakage due to scratches on the frame surface when using the gasket. Multiple cells should be assembled with each other at once and the assembly is inspected, resulting in difficulties in the process.

Furthermore, it is common to manufacture a gasket using a rubber resin as a base resin. When such rubber resin is attached to the frame made of plastic, a difference between thermal strains of the plastic material and the rubber resin may occur. In particular, there is a problem in that the airtightness of the gasket is destroyed at low temperatures below -10°C, and at high temperatures above 40°C and there is also a problem in that the acid resistance of the gasket is weak in an acidic electrolyte solution.

Therefore, in order to solve the above limitations and problems, there is a need to develop a scheme other than the scheme using a gasket to combine the frame and current collector with each other.

**SUMMARY**

A purpose of the present disclosure is to provide an adhesive that may replace the gasket in the module of the secondary battery.

A purpose of the present disclosure is to provide a secondary battery module manufactured by attaching the frame and current collector of a secondary battery using an adhesive for replacing a gasket, and a secondary battery including the same.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

A first aspect of the present disclosure provides a secondary battery module comprising: a first current collector;

a second current collector spaced from the first current collector; a separator disposed between the first current collector and the second current collector; and a frame defining a first electrode reservoir between the first current collector and the separator and defining a second electrode reservoir between the second current collector and the separator, wherein the first current collector and the frame are fixed to each other via a first adhesive member, wherein the second current collector and the frame are fixed to each other via a second adhesive member, wherein each of the first adhesive member and the second adhesive member includes an adhesive satisfying a following condition (1):

$$\text{Condition (1): } A_i \geq 300 \text{ gf/25mm}$$

wherein in the condition (1), $A_i$ denotes an adhesive force measured based on a peeling force required to peel off the adhesive from an adhering target by 180° at a speed of 300mm/min.

In accordance with some embodiments of the secondary battery module, the adhesive further satisfies a following condition (2):

$$\text{Condition (2): } 100 \text{ cps} \leq V \leq 20,000 \text{ cps}$$

wherein in the condition (2), V denotes a viscosity measured at 30 rpm and 30°C using a BM type viscometer.

In accordance with some embodiments of the secondary battery module, the adhesive further satisfies a following condition (3):

$$\text{Condition (3): } P_{(+)} \geq 0.5\text{bar, and } P_{(-)} \leq -0.5\text{bar}$$

wherein in the condition (3), P(+) and $P_{(-)}$ respectively mean positive and negative pressures under which gas begins to leak from the secondary battery module when the positive pressure and the negative pressure are applied respectively to the secondary battery module obtained by assembling the first current collector, the second current collector, and the frame with each other.

In accordance with some embodiments of the secondary battery module, each of the first adhesive member and the second adhesive member includes at least one of an acrylate-based adhesive, an acrylate-ester-based adhesive, an acrylate-ethylene-based adhesive, a polycarbonate-based adhesive, a polyethylene-based adhesive, an epoxy-based adhesive, and an isocyanate-based adhesive.

In accordance with some embodiments of the secondary battery module, each of the first adhesive member and the second adhesive member includes one of a solvent-type adhesive, an emulsion-type adhesive, a hot melt-type adhesive, a liquid-curable type adhesive, and a film-type adhesive, or a combination thereof.

In accordance with some embodiments of the secondary battery module, the first current collector includes a first metal current collector and a first carbon current collector disposed between the first metal current collector and the frame, wherein the second current collector includes a second metal current collector and a second carbon current collector disposed between the second metal current collector and the frame, wherein the first carbon current collector and the second carbon current collector are fixed to the frame via the first adhesive member and the second adhesive member, respectively.

In accordance with some embodiments of the secondary battery module, the first adhesive member and the second adhesive member are applied or adhered to edges of the first carbon current collector and the second carbon current collector, respectively, and thus are fixed to the frame.

In accordance with some embodiments of the secondary battery module, the first adhesive member is adhered to one side in an out-of-plane direction of the frame, wherein the second adhesive member is adhered to the other side in the out-of-plane direction of the frame.

In accordance with some embodiments of the secondary battery module, each of the first adhesive member and the second adhesive member is formed in a closed ring shape.

In accordance with some embodiments of the secondary battery module, the frame is formed in a hollow rectangular shape, wherein each of the first adhesive member and the second adhesive member is formed in a strip shape and is disposed so that an edge thereof coincides with an edge of the frame.

In accordance with some embodiments of the secondary battery module, the secondary battery module further comprises a communication channel fluid-communicating the first electrode reservoir and the second electrode reservoir with each other.

In accordance with some embodiments of the secondary battery module, the communication channel has at least a portion defined by the first adhesive member and the frame or the second adhesive member and the frame.

In accordance with some embodiments of the secondary battery module, the secondary battery module may further comprise a first solid electrode disposed in the first electrode reservoir and impregnated with the first liquid electrode, a second solid electrode disposed in the second electrode reservoir and impregnated with the second liquid electrode, and the first solid electrode and the second solid electrode are disposed in the frame.

A second aspect of the present disclosure provides a secondary battery including a plurality of secondary battery modules, each module including the secondary battery module as described above.

In accordance with some embodiments of the secondary battery, the secondary battery operates by oxidation and reduction of redox couple dissolved in the electrolyte of the liquid electrode.

In accordance with some embodiments of the secondary battery, the redox couple is a vanadium redox couple.

The adhesive for the secondary battery in accordance with the present disclosure may replace the conventional gasket, thereby effectively reducing the volume of the secondary battery module, eliminating the need of the high pressure process, and not causing micro scratches on the frame surface. When the adhesive for the secondary battery in accordance with the present disclosure is used, high process efficiency may be achieved because it is easy to inspect each individual module assembly.

The adhesive for the secondary battery in accordance with the present disclosure has excellent adhesion to and airtightness between elements of the secondary battery module.

The adhesive for the secondary battery in accordance with the present disclosure may maintain stable airtightness even at high pressure.

A difference between the thermal strain of the adhesive for the secondary battery in accordance with the present disclosure and the thermal strain of each of the current collector and the frame is small. Further, the adhesive for the secondary battery in accordance with the present disclosure has small thermal strain not only at room temperature, but also at high and low temperatures. Thus, the adhesive for the secondary battery in accordance with the present disclosure has excellent airtightness stability.

Effects of the present disclosure are not limited to the effects mentioned above, and other effects not mentioned will be clearly understood by those skilled in the art from the descriptions below.

**BRIEF DESCRIPTION OF DRAWINGS**

FIG. 1 is an exploded perspective view of a secondary battery according to one embodiment of the present disclosure.
FIG. 2 is an exploded perspective view of a secondary battery according to another one embodiment of the present disclosure.
FIG. 3 is a cross-sectional view of a secondary battery module according to one embodiment of the present disclosure.

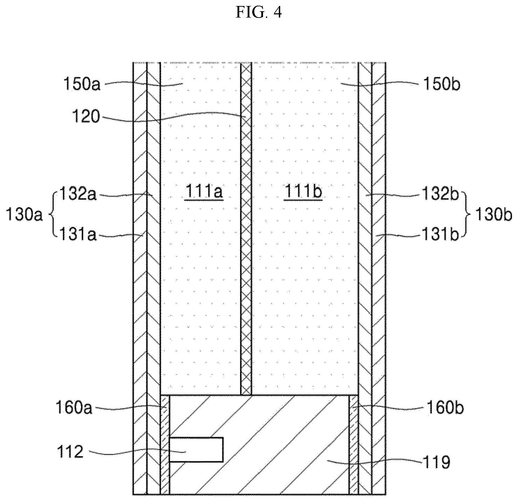

FIG. 4 is a cross-sectional view of a secondary battery module according to another one embodiment of the present disclosure.

**DETAILED DESCRIPTIONS**

Advantages and features of the present disclosure, and a method of achieving the advantages and features will become apparent with reference to embodiments described later in detail together with the accompanying drawings. However, an embodiment of the present disclosure is not limited to the embodiments as disclosed under, but may be implemented in various different forms. Thus, these embodiments are set forth only to make the present disclosure complete, and to completely inform the scope of the present disclosure to those of ordinary skill in the technical field to which the present disclosure belongs, and the present disclosure is only defined by the scope of the claims.

For simplicity and clarity of illustration, elements in the drawings are not necessarily drawn to scale. The same reference numbers in different drawings represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

A shape, a size, a ratio, an angle, a number, etc. disclosed in the drawings for illustrating embodiments of the present disclosure are illustrative, and an embodiment of the present disclosure is not limited thereto.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

It will also be understood that when a first element or layer is referred to as being present "on" a second element or layer, the first element may be disposed directly on the second element or may be disposed indirectly on the second element with a third element or layer being disposed between the first and second elements or layers. It will also be understood that when a first element or layer is referred to as being present "under" a second element or layer, the first element may be disposed directly under the second element or may be disposed indirectly under the second element with a third element or layer being disposed between the first and second elements or layers.

It will be understood that when an element or layer is referred to as being "connected to", or "coupled to" another element or layer, it may be directly connected to or coupled to another element or layer, or one or more intervening elements or layers therebetween may be present. In addition, it will also be understood that when an element or layer is referred to as being "between" two elements or layers, it may be the only element or layer between the two elements or layers, or one or more intervening elements or layers therebetween may also be present.

In addition, it will also be understood that when an element or layer is referred to as being "between" two elements or layers, it may be the only element or layer between the two elements or layers, or one or more intervening elements or layers therebetween may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described under could be termed a second element, component, region, layer or section, without departing from the spirit and scope of the present disclosure.

Spatially relative terms, such as "beneath," "below," "lower," "under," "above," "upper," and the like, may be used herein for ease of illustration to illustrate one element or feature's relationship to another element or feature as illustrated in the figures. It will be understood that the spatially relative terms are intended to encompass different orientations of the device in use or in operation, in addition to the orientation depicted in the figures. For example, when the device in the drawings may be turned over, elements described as "below" or "beneath" or "under" other elements or features would then be oriented "above" the other elements or features. Thus, the example terms "below" and "under" may encompass both an orientation of above and below. The device may be otherwise oriented, for example, rotated 90 degrees or at other orientations, and the spatially relative descriptors used herein should be interpreted accordingly.

The features of the various embodiments of the present disclosure may be partially or entirely combined with each other, and may be technically associated with each other or operate with each other. The embodiments may be implemented independently of each other and may be implemented together in an association relationship.

In interpreting a numerical value, the value is interpreted as including an error range unless there is no separate explicit description thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

Further, the term 'or' means 'inclusive or' rather than 'exclusive or'. That is, unless otherwise stated or clear from the context, the expression that 'x uses a or b' means any one of natural inclusive permutations.

The terms used in the description below have been selected as being general and universal in the related technical field. However, there may be other terms than the terms depending on the development and/or change of technology, convention, preference of technicians, etc. Therefore, the terms used in the description below should not be understood as limiting technical ideas, but should be understood as examples of the terms for illustrating embodiments.

Further, in a specific case, a term may be arbitrarily selected by the applicant, and in this case, the detailed meaning thereof will be described in a corresponding description section. Therefore, the terms used in the description below should be understood based on not simply the name of the terms, but the meaning of the terms and the contents throughout the Detailed Descriptions.

Unless there is a specific limitation in the present disclosure, "adhesive" and "adhesive member" may be interpreted to have the same meaning. The adhesive itself attached to a specific part of the secondary battery module may be be referred to as the adhesive member.

Hereinafter, the present disclosure will be described with reference to drawings for illustrating the secondary battery according to embodiments of the present disclosure.

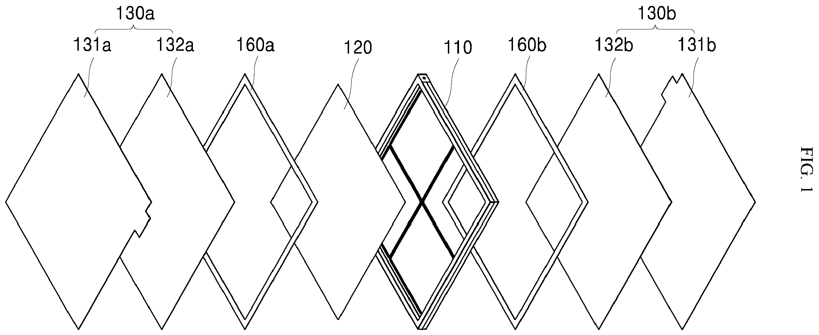

Referring to Fig.1, the secondary battery module according to an embodiment of the present disclosure may include a first current collector 130a, a second current collector 130b spaced apart from the first current collector 130a, a separator 120 disposed between the first current collector 130a and the second current collector 130b, a frame 110 defining a first electrode reservoir 111a and a second electrode reservoir 111b, a first liquid electrode which is accommodated in the first electrode reservoir 111a and where a first half reaction occurs, and a second liquid electrode which is accommodated in the second electrode reservoir 111b and where a second half reaction occurs, a first adhesive member 160a bonding the first current collector 130a and the frame 110 to each other, and a second adhesive member 160b bonding the second current collector 130b and the frame 110 to each other. In this regard, the secondary battery may further include a communication channel 112 communicating the first electrode reservoir 111a and the second electrode reservoir 111b with each other.

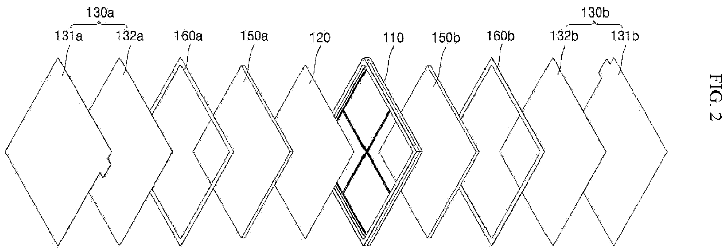

Referring to Fig. 2, the secondary battery module according to an embodiment of the present disclosure may further include a first solid electrode 150a disposed in the first electrode reservoir 111a and impregnated with the first liquid electrode, a second solid electrode 150b disposed in the second electrode reservoir 111b and impregnated with the second liquid electrode. When the secondary battery module includes the solid electrodes, electrons can move more actively during charging and discharging of the secondary battery, thus, the redox reaction can be performed more smoothly, thereby improving the performance of the redox secondary battery.

Hereinafter, the present disclosure is described in more detail with reference to Fig. 1 and Fig. 2.

The first current collector 130a includes a first metal current collector 131a made of metal and electrically connected to a bus bar, and a first carbon current collector 132a disposed between the first metal current collector 131a and the frame 110.

The second current collector 130b includes a second metal current collector 131b made of metal and electrically connected to the bus bar, and a second carbon current disposed collector 132b disposed between the second metal current collector 131b and the frame 110.

The frame 110 may include a hollow rectangular frame body 119, and may further include a frame reinforcement portion (not shown) that prevents the frame body 119 from being deformed.

Each of the first metal current collector 131a and the second metal current collector 131b may be made of a metal with high electrical conductivity, for example, copper or aluminum.

Each of the first carbon current collector 132a and the second carbon current collector 132b may be made of a material having high electrical conductivity and high acid resistance, such as graphite, carbon, carbon plastic, etc.

The first carbon current collector 132a is disposed between the first liquid electrode and the first metal current collector 131a, and the second carbon current collector 132b is disposed between the second liquid electrode and the second metal current collector 131b so that electrons migrate therebetween. The first carbon current collector 132a and the second carbon current collector 132b respectively prevent the first metal current collector 131a and the second metal current collector 131b from being oxidized. Each of the first carbon current collector 132a and the second carbon current collector 132b may be formed in a square plate shape or may be formed in an applied manner onto the first metal current collector 131a and the second metal current collector 131b, respectively.

Furthermore, the first carbon current collector 132a and the second carbon current collector 132b are formed so that edges thereof coincide with an edge of the frame 110. The first carbon current collector 132a and the second carbon current collector 132b are fixed to the frame 110 via the first adhesive member 160a and the second adhesive member 160b, respectively. The first adhesive member 160a and the second adhesive member 160b may be applied or adhered to the edges of the first carbon current collector 132a and the second carbon current collector 132b, respectively.

Furthermore, each of the first carbon current collector 132a and the second carbon current collector 132b may be made of a material having high electrical conductivity and high acid resistance, such as graphite, carbon, carbon plastic, etc.

The first liquid electrode is an electrolyte in which an anode redox couple is dissolved. The anode redox couple may include at least one of vanadium (V), zinc (Zn), bromine (Br), chromium (Cr), manganese (Mn), titanium (Ti), iron (Fe), cerium (Ce), and cobalt (Co). In this embodiment, the anode redox couple is a $V^{2+}/V^{3+}$ redox couple. The first liquid electrode may be an acidic aqueous solution as a solution which conducts electric current via ionization. Preferably, the acidic aqueous solution includes sulfuric acid. In this embodiment, the first liquid electrode may be prepared by dissolving $VOSO_4$ (vanadylsulfate) or $V_2O_5$ (vanadium pentoxide) in $H_2SO_4$ aqueous solution.

In the first liquid electrode, the first half reaction occurs. The first half reaction is as follows:

$$V^{2+} \longleftrightarrow V^{3+} + e$$

where $\rightarrow$ represents a discharge reaction direction and $\leftarrow$ represents a charge reaction direction.

In a discharging operation, vanadium divalent ions are oxidized to vanadium trivalent ions. In a charging operation, vanadium trivalent ions are reduced to vanadium divalent ions.

The first liquid electrode is surrounded with the frame 110, the first current collector 130a, and the separator 120. The first liquid electrode is not leaked in an in-plane direction between the first current collector 130a and the frame 110 due to the first adhesive member 160a. The first liquid electrode is accommodated in the first electrode reservoir 111a.

The first liquid electrode is electrically connected to the first current collector 130a. In a discharging operation, electrons migrate therefrom to the first current collector 130a. In a charging operation, electrons from the first current collector 130a migrate to the first liquid electrode. The first liquid electrode is in contact with the separator 120, such that hydrogen cations (protons) migrate through the separator 120.

The second liquid electrode is an electrolyte in which a cathode redox couple is dissolved. The cathode redox couple may include at least one of vanadium (V), zinc (Zn), bromine (Br), chromium (Cr), manganese (Mn), titanium (Ti), iron (Fe), cerium (Ce), and cobalt (Co). In this embodiment, the cathode redox couple is a $V^{4+}/V^{5+}$ redox couple. The second liquid electrode may be an acidic aqueous solution as a solution which conducts electric current via ionization. Preferably, the acidic aqueous solution includes sulfuric acid. In this embodiment, the second liquid electrode may be prepared by dissolving $VOSO_4$ (vanadylsulfate) or $V_2O_5$ (vanadium pentoxide) in $H_2SO_4$ aqueous solution.

In the second liquid electrode, the second half reaction occurs. The second half reaction is as follows:

$$V^{51} + e^- \longleftrightarrow V^{4+}$$

where $\rightarrow$ represents a discharge reaction direction and $\leftarrow$ represents a charge reaction direction.

In a discharging operation, vanadium pentavalent ions are reduced to vanadium tetravalent ions. In a charging operation, vanadium tetravalent ions are oxidized to vanadium pentavalent ions.

The second liquid electrode is surrounded with the frame 110, the second current collector 130b, and the separator 120. The second liquid electrode is not leaked in an in-plane direction between the second current collector 130b and the frame 110 due to the second adhesive member. The second liquid electrode is accommodated in the second electrode reservoir 111b.

The second liquid electrode is electrically connected to the second current collector 130b. Thu, in the charging operation, electrons migrate therefrom to the second current collector 130b. In the discharging operation, electrons from the second current collector 130b migrate to the second liquid electrode.

The second liquid electrode is in contact with the separator 120, such that hydrogen cations (protons) migrate through the separator 120.

As described above, the first liquid electrode and the second liquid electrode include the same ingredient. The first liquid electrode and the second liquid electrode are made of the same electrolyte containing vanadium ions. Hereinafter, the first liquid electrode and the second liquid electrode are collectively referred to as a liquid electrode.

The frame 110 is formed in the hollow rectangle plate. According to an embodiment, the frame 110 may have a shape of a diamond, a circle, a triangle, or a polygon (a pentagon, hexagon, etc.). The frame 110 has a predetermined thickness in an out-of-plane direction so as to define the first electrode reservoir 111a and the second electrode reservoir 111b. The frame 110 is formed so that an edge thereof coincides with the edge of the first carbon current collector 132a of the first current collector 130a and the edge of the second carbon current collector 132b of the second current collector 130b.

The first current collector 130a is disposed on one side in the out-of-plane direction of the frame 110, and the second current collector 130b is disposed on the other side in the out-of-plane direction of the frame 110. A hollow space of the frame 110 is closed with the first current collector 130a and the second current collector 130b. The frame 110 is disposed between the first current collector 130a and the second current collector 130b to prevent the first liquid electrode and the second liquid electrode from leaking in the in-plane direction. The frame 110 is fixed to the first current collector 130a via the first adhesive member 160a, and is fixed to the second current collector 130b via the second adhesive member 160b.

The separator 120 is disposed in the hollow space of the frame 110. The separator 120 divides the hollow space of the frame 110 into two spaces. The frame 110 may be fixed to the separator 120 via an adhesive of the same composition as that of the first adhesive member 160a or the second adhesive member 160b.

The frame 110 defines the first electrode reservoir 111a between the first current collector 130a and the separator 120, and defines the second electrode reservoir 111b between the second current collector 130b and the separator 120.

The frame 110 accommodates the first liquid electrode and the second liquid electrode in the hollow space. The first adhesive member 160a is adhered to an edge of one side in the out-of-plane direction of the frame 110, while the second adhesive member 160b is adhered to an edge of the other side in the out-of-plane direction of the frame 110.

When the communication channel 112 is present, the frame 110 together with the first adhesive member 160a and the second adhesive member 160b may define the communication channel 112. The communication channel 112 communicates the first electrode reservoir 111a and the second electrode reservoir 111b to each other. The first liquid electrode and/or the second liquid electrode may flow through the communication channel 112. One portion of the communication channel 112 is formed as a groove in the in-plane direction at the edge of the frame 110, and the other portion thereof is formed as a hole in the out-of-plane direction thereof.

At least a portion of the communication channel 112 may be defined by the first adhesive member 160a and the frame 110 or the second adhesive member 160b and the frame 110. The communication channel 112 may be disposed between the first adhesive member 160a and the second adhesive member 160b. One side in the out-of-plane direction of the communication channel 112 may be covered with the first adhesive member 160a while the other side in the out-of-plane direction thereof may be covered with the second adhesive member 160b. The first liquid electrode and/or the second liquid electrode flowing through the communication channel 112 are in contact with the first adhesive member 160a and/or the second adhesive member 160b.

The separator 120 is disposed in the hollow space of the frame 110 so as to separate the first liquid electrode and the second liquid electrode from each other and to allow hydrogen cations (protons) to migrate between the first liquid electrode and the second liquid electrode therethrough. The separator 120 is disposed in the hollow space of the frame 110 so as to distinguish the first electrode reservoir 111a and the second electrode reservoir 111b from each other.

The separator 120 is disposed between the first liquid electrode and the second liquid electrode. The separator 120 is disposed between the first current collector 130a and the second current collector 130b. The separator 120 is disposed inwardly of the first adhesive member 160a and the second adhesive member 160b in the in-plane direction of the frame 110. An edge of the separator 120 contacts the frame 110.

In the discharging operation, the hydrogen cations migrate from the first liquid electrode to the second liquid electrode through the separator 120. In the charging operation, the hydrogen cations migrate from the second liquid electrode to the first liquid electrode through the separator 120.

The separator 120 may include perfluorinated ionomer, partially fluorinated polymer, or non-fluorinated hydrocarbons. The separator 120 may be made of or include Nafion®, Flemion®, NEOSEPTA-F®, or Gore Select®. However, an embodiment of the present disclosure is not necessarily limited thereto.

According to one embodiment, in order to exhibit excellent mechanical strength and acid resistance, the separator 120 may be a separator comprising a polybenzimidazole-based compound containing at least one polybenzimidazole monomer selected from ab-PBI (Poly(2,5-benzimidazole)), oPBI (Poly[2,2'-(4,4'- oxybis(1,4-phenylene))-5,5'-bibenzimidazole), m-PBI (meta-polybenzimidazole), p-PBI (para-polybenzimidazole), s-PBI (sulfonated polybenzimidazole), f-PBI (fluorine-containing polybenzimidazole), 2OH-PBI (Dihydroxy polybenzimidazole), PIPBI (Phenylindane-polybenzimidazole), and PBI-OO (poly[(1-(4,4'-diphenylether)-5-oxybenzimidazole)-benzimidazole]).

For example, the polybenzimidazole-based separator according to the present disclosure may be manufactured by applying a polybenzimidazole-based solution in which polybenzimidazole is dissolved in an organic solvent on a substrate film made of polyethylene terephthalate (PET) to form a liquid film and converting the liquid film to a solid film and then removing the solid film from the substrate film to obtain the separator. Alternatively, the polybenzimidazole-based separator according to the present disclosure may be manufactured by impregnating a porous membrane made of polyethylene (PE) and/or polypropylene (PP) with the polybenzimidazole-based solution to obtain the separator. The organic solvent is one selected from N,N-dimethylacetamide (DMAc), dimethylformamide (DMF), dimethyl sulfoxide (DMSO), and N-methyl-2-pyrrolidone (NMP).

The first current collector 130a is disposed on one side of the frame 110. The first current collector 130a together with the frame 110 and the separator 120 defines the first electrode reservoir 111a. The first current collector 130a and the second current collector 130b extend in parallel to each other and are spaced apart from each other. The first current collector 130a is adhered to the first adhesive member 160a attached to the frame 110. The first current collector 130a is fixed to the frame 110 via the first adhesive member 160a. The first adhesive member 160a is applied or adhered onto the edge of the first current collector 130a.

The first current collector 130a is adhered to the first adhesive member 160a and thus is not in direct contact with the first liquid electrode or the second liquid electrode flowing through the communication channel 112. The first current collector 130a is electrically connected to the first liquid electrode such that electrons migrate therebetween so that current flows therebetween during the charging and discharging operations.

The first current collector 130a includes the first metal current collector 131a made of the metal and electrically connected to the bus bar, and the first carbon current collector 132a disposed between the first metal current collector 131a and the frame 110.

The first carbon current collector 132a is disposed between the first liquid electrode and the first metal current collector 131a to allow electrons to migrate therebetween, and to prevent the first metal current collector 131a from being oxidized. The first carbon current collector 132a may be formed in a square plate shape or may be formed in an applied manner onto the first metal current collector 131a.

The first carbon current collector 132a is formed so that the edge thereof coincides with the edge of the frame 110. The first carbon current collector 132a is fixed to the frame 110 via the first adhesive member 160a. The first adhesive member 160a is applied or adhered to the edge of the first carbon current collector 132a. Thus, the first adhesive member 160a may seal a space between the first carbon current collector 132a of the first current collector 130a and the frame 110.

Each of the first adhesive member 160a and the second adhesive member 160b may be formed in a strip shape. Each of the first adhesive member 160a and the second adhesive member 160b may be formed in a hollow rectangular shape. Each of the first adhesive member 160a and the second adhesive member 160b may be formed in a closed ring shape. An edge of each of the first adhesive member 160a and the second adhesive member 160b coincides with the edge of the frame 110.

The first adhesive member 160a bonds the first carbon current collector 132a of the first current collector 130a and the frame 110 to each other. The first adhesive member 160a seals a space between the first carbon current collector 132a of the first current collector 130a and the frame 110. The first adhesive member 160a is disposed between the first carbon current collector 132a of the first current collector 130a and the frame 110. The first adhesive member 160a is adhered to an edge of on side in the out-of-plane direction of the frame 110. The first adhesive member 160a is adhered to an edge of one of both opposing surfaces of the first carbon current collector 132a on which the first metal current collector 131a is not disposed. The first adhesive member 160a may be applied to the first carbon current collector 132a so as to be adhered to the frame 110.

The first metal current collector 131a is made of a metal with high electrical conductivity, for example, copper or aluminum. The first metal current collector 131a is formed in a rectangular plate shape, wherein a portion thereof may protrude so as to be connected to the bus bar.

The first metal current collector 131a may be formed as a flexible thin film or a rigid plate.

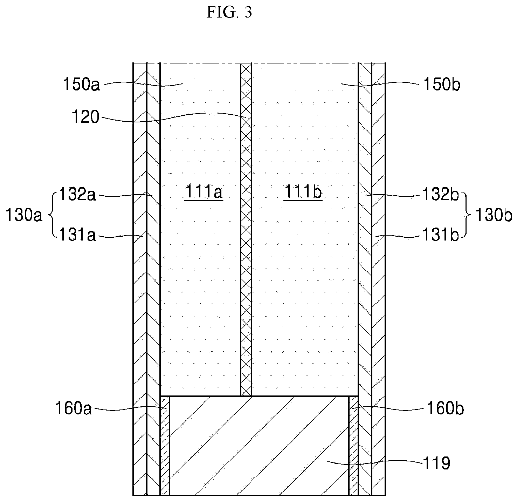

The first carbon current collector 132a is disposed on one surface of the first metal current collector 131a. As shown in FIG. 3, when a plurality of secondary batteries constitute a module, the first carbon current collector 132a is disposed on each of both opposing surfaces of the first metal current collector 131a.

The second current collector 130b is disposed on the other side of the frame 110. The second current collector 130b together with the frame 110 and the separator 120 defines the second electrode reservoir 111b. The second current collector 130b and the first current collector 130a extend in parallel manner to each other and spaced apart from each other. The second current collector 130b is adhered to the second adhesive member 160b attached to the frame 110. The second current collector 130b is fixed to the frame 110 via the second adhesive member 160b. The second adhesive member 160b is applied or adhered onto the edge of the second current collector 130b. Thus, the second adhesive member 160b may seal a space between the second carbon current collector 132b of the second current collector 130b and the frame 110.

Referring to Fig. 2, the secondary battery module according to an embodiment of the present disclosure may further include a first solid electrode 150a and a second solid electrode 150b. The first solid electrode 150a is impregnated with the first liquid electrode and disposed in the first electrode reservoir 111a. The first solid electrode 150a is surrounded with the frame 110, the first current collector 130a, and the separator 120. The first solid electrode 150a includes a carbon-based material such as carbon or graphite felt, carbon cloth, carbon black, graphite powder, or graphene. The first solid electrode 150a is in close contact with the first current collector 130a and the separator 120.

The second solid electrode 150b is impregnated with the second liquid electrode and disposed in the second electrode reservoir 111b. The second solid electrode 150b is surrounded with the frame 110, the second current collector 130b, and the separator 120. The second solid electrode 150b includes a carbon-based material such as carbon or graphite felt, carbon cloth, carbon black, graphite powder, or graphene. The second solid electrode 150b is disposed inwardly of the second adhesive member 160b in the in-plane direction of the frame 110.

When the first solid electrode 150a and the second solid electrode 150b are included in the secondary battery, the first solid electrode 150a and the second solid electrode 150b are disposed in the frame 110.

In order to achieve the above purpose, a secondary battery module according to one aspect of the present disclosure includes: a first current collector; a second current collector spaced from the first current collector; a separator disposed between the first current collector and the second current collector; and a frame defining a first electrode reservoir between the first current collector and the separator and defining a second electrode reservoir between the second current collector and the separator, wherein the first current collector and the frame are fixed to each other via a first adhesive member, wherein the second current collector and the frame are fixed to each other via a second adhesive member.

The first current collector includes a first metal current collector made of metal and electrically connected to the bus bar, and a first carbon current collector disposed between the first metal current collector and the frame. The second current collector includes a second metal current collector made of metal and electrically connected to the bus bar, and a second carbon current collector disposed between the second metal current collector and the frame.

Each of the first carbon current collector and the second carbon current collector is made of a material such as graphite, carbon, carbon plastic, etc. and may have high electrical conductivity and high acid resistance. The first carbon current collector and the second carbon current collector are fixed to the frame via the first adhesive member and the second adhesive member, respectively. In this regard, the first adhesive member and the second adhesive member may be applied or adhered to edges of the first carbon current collector and the second carbon current collector, respectively.

The adhesive constituting the first adhesive member and the second adhesive member may be used without any limitation as long as it satisfies the airtightness comparable to that achieved using the gasket, and has high adhesiveness to ensure the stability of the battery.

According to one embodiment of the present disclosure, each of the first adhesive member and the second adhesive member may include the adhesive that further satisfies a following condition (1) as a condition to exhibit excellent adhesion for fixing the current collector and the frame to each other:

$$\text{Condition (1): } A_i \geq 300 \text{ gf/25mm}$$

wherein in the condition (1), $A_i$ denotes an adhesive force measured based on a peeling force required to peel off the adhesive from an adhering target by 180° at a speed of 300mm/min. The adhesive force may be 300 gf/25mm or greater, for example, 700 gf/25mm or greater, for example, 1,000 gf/25mm or greater, for example, 1,200 gf/25mm or greater, for example, 1,500 gf/25mm or greater, for example, 2,000 gf/25mm or greater. There is no particular upper limit in terms of increasing the adhesive force. However, for example, the adhesive force may be 2,500 gf/25mm or smaller.

In accordance with the present disclosure, the adhesive member is applied to bond the current collector and the frame to each other. Thus, excellent airtightness may be achieved only when the adhesive member exhibits sufficient adhesive strength between the current collector and the frame. In the present disclosure, a current collector that is laminated with a metal current collector and a carbon current collector is used. When the current collector is attached to a frame, the portion of the current collector that is attached to the frame is the carbon current collector portion. The adhesive member according to one embodiment of the present disclosure exhibits the characteristic of adhering well to a carbon current collector made of such as graphite, expanded graphite., but tends not to adhere well to a frame made of metal or plastic. Therefore, the adhesive member of the present disclosure is required to exhibit excellent adhesiveness, especially to frames. As described above, an adhesive force of at least 300 gf/25mm is required, and preferably, an adhesive force of 1,200 gf/25mm or greater is required.

For example, in accordance with the present disclosure, the current collector may be embodied as a metal current collector (e.g., SUS (Steel Use Stainless)), a plastic current collector (e.g., polycarbonate), and a carbon-based current collector. According to an example, the current collector may be the carbon-based current collector.

In accordance with the present disclosure, the frame may be a metal frame or a plastic frame, and according to one embodiment, the frame may be a plastic frame. The plastic used to form the plastic frame may be a styrene-based plastic. Specific types of the plastic may include polystyrene (PS), high impact polystyrene (HIPS), styrene acrylonitrile (AS), and acrylonitrile butadiene styrene (ABS). Preferably, the plastic may be acrylonitrile butadiene styrene (ABS).

Furthermore, the adhesive in accordance with the present disclosure has a small difference between the thermal strains at room temperature and high and low temperatures when being attached to the carbon-based current collector and the plastic frame, and thus, has high resistance to temperature impact. In particular, the airtightness may be maintained at low temperatures of -10°C or lower, preferably, low temperature of -20°C and high temperatures of 40°C or higher, preferably, high temperatures of 50°C because the thermal strain is significantly small even low temperatures of -10°C or lower, preferably, low temperature of -20°C and high temperatures of 40°C or higher, preferably, high temperatures of 50°.

In one embodiment, the secondary battery module in accordance with the present disclosure may include an acidic aqueous solution in which a redox couple is dissolved as a liquid electrode, as will be described later. Therefore, the adhesive in accordance with the present disclosure is in contact with the acidic aqueous solution for a long time, and has excellent acid resistance, thereby ensuring airtightness and stability.

According to one embodiment of the present disclosure, each of the first adhesive member and the second adhesive member may include the adhesive that further satisfies a following condition (2):

$$\text{Condition (2): } 100 \text{ cps} \leq V \leq 20000 \text{ cps}$$

In the condition (2), V means a viscosity measured at 30 rpm and 30°C using a BM type viscometer. Specifically, the viscosity may be controlled to be in a range of 100 cps inclusive to 20,000 cps. For example, the viscosity may be 1,000 cps or higher, for example, 2,000 cps or higher, for example, 10,000 cps or lower, for example, to 5,000 cps or lower, for example, 3,000 cps or lower. When the viscosity of the adhesive becomes too high, and thus exceeds 20,000 cps, the adhesive may not effectively fill a gap between the frame and the current collector, making it impossible to secure airtightness. On the contrary, when the viscosity of the adhesive is too low, and thus, below 100 cps, problems with poor applicability and processability may occur.

The adhesive in accordance with the present disclosure may have excellent airtightness and may specifically satisfy a following condition (3):

$$\text{Condition (3): } P_{(+)} \geq 0.5 \text{bar, and } P_{(-)} \leq -0.5 \text{bar}$$

wherein in the condition (3), $P(+)$ and $P_{(-)}$ respectively mean positive and negative pressures under which gas begins to leak from the secondary battery module when the positive pressure and the negative pressure are applied respectively to the secondary battery module obtained by assembling the first current collector, the frame, and the second current collector with each other. As an absolute value of each of $P(+)$ and $P_{(-)}$ is larger, more excellent airtightness is maintained even at higher pressures.

In particular, the secondary battery module in accordance with the present disclosure operates using the solid electrode impregnated with the liquid electrode received in the electrode reservoir of each secondary battery module, without using the electrolyte tank and the fluid pump. Thus, a very high pressure is applied to the element within the secondary battery module. It is required to have pressure resistance against positive pressure of at least 0.5 bar or higher. In addition, during the electrolyte injection process in the manufacturing process of secondary battery, the electrode reservoir is brought into a vacuum state and a negative pressure is applied thereto in order to inject the electrolyte thereto. Thus, it is necessary to maintain the pressure resistance of the secondary battery even under such negative pressure. It is required to have pressure resistance against negative pressure of at least -0.5 bar or lower.

Therefore, in order to ensure high operation stability of the secondary battery, it is desirable to satisfy the above condition (3). From the above viewpoint, it is required that the positive pressures under which the gas leakage occurs are 0.5 bar or higer, and preferably 1 bar or higher, more preferably, 2 bar or higher and, most preferably, 3 bar or higher In addition, it is required that the negative pressures under which the gas leakage occurs are -0.5 bar or lower, and preferably -1 bar.

In accordance with the present disclosure, a condition for satisfying the pressure resistance is as follows: a certain or higher pressure is initially applied to the cell module of the secondary battery (this is referred to as a reference pressure) and, then, the cell module is left for 30 days. Then, the pressure is measured. In this regard, an absolute of (the reference pressure - the measured pressure)/(the reference pressure) × 100 % should be smaller than 50%.

In addition, the pressure resistance of the adhesive of the present disclosure should be satisfied not only at room temperature but also at high and low temperatures, for example, low temperatures of -10°C or lower, preferably a low temperature of -20°C and high temperatures of 40°C or higher, preferably, a high temperature of 50°C.

Any adhesive that satisfies the characteristics as described above may be used as the adhesive for the adhesive member without limitations. Specifically, each of the first adhesive member and the second adhesive member may include at least one of an acrylate-based adhesive, an acrylate-ester-based adhesive, an acrylate-ethylene-based adhesive, a polycarbonate-based adhesive, a polyethylene-based adhesive, an epoxy-based adhesive and an isocyanate-based adhesive. It is preferable that each of the first adhesive member and the second adhesive member includes an acrylate-ester adhesive. However, an embodiment of the present disclosure is not necessarily limited thereto. However, in order to improve resistance to temperature impact and acid resistance, it is preferable that each of the first adhesive member and the second adhesive member does not include an adhesive that includes rubber-based resin as a base resin. The "A-based adhesive" means that the adhesive includes a A-based resin as a base resin.

In addition to the base resin, the adhesive of the present disclosure may further include an additive commonly used in the present technical field, if necessary. According to one embodiment, the adhesive may further include one or more additives selected from a curing agent, an adhesion promoter, a thickener, a diluent, and a heat resistance improver. According to one embodiment, a total amount of the additive is preferably in a range of 0.01 to 10 parts by weight based on 100 parts by weight of the base resin of the adhesive.

There is no particular limitation on a scheme of applying the first adhesive member and the second adhesive member. Specifically, each of the first adhesive member and the second adhesive member may include one of a solvent-type adhesive, an emulsion-type adhesive, a hot melt-type adhesive, a liquid-curable type adhesive, and a film-type adhesive, or a combination thereof.

Preferably, a solvent-type adhesive may be used. According to one embodiment, acrylic resin can be applied as an adhesive by mixing it with a solvent and then applying it to the adhering target and drying it. The solvent is not particularly limited as long as it is used in the field, and may be adjusted differently depending on the selected resin. Examples of solvents include acetate-based solvents such as ethyl acetate and butyl acetate; aromatic solvents such as benzene, toluene, and xylene; ketone solvents such as acetone, and methyl ethyl ketone; aliphatic hydrocarbon solvents such as n-Hexane, n-Haptane, and cyclohexane; alcohol solvents such as methanol, ethanol, and isopropanol may be used alone or in combination.

For example, when each of the first adhesive member and the second adhesive member includes the solvent-based adhesive, an adhesive member may be formed by mixing a liquid adhesive with a solvent to produce an adhesive solution and then applying the adhesive solution to an adherend and then, drying the same. In another example, when each of the first adhesive member and the second adhesive member includes the film-type adhesive, the adhesive solution is applied to a carrier film such as an OPP (oriented polypropylene) film to prepare an adhesive double-sided tape which in turn is placed between the frame and the current collector and then pressed. The double-sided tape may be adhered to the edges of the frame and the current collector and may be punched.

A thickness of the adhesive member may be appropriately adjusted. From the viewpoint of minimizing a volume of the secondary battery module while ensuring sufficient adhesive strength, the thickness of each of the first adhesive member and the second adhesive member may be, for example, in a range of 1 to 500 $\mu$m, for example, 50 to 300 $\mu$m. However, an embodiment of an embodiment of the present disclosure is not necessarily limited thereto.

A secondary battery according to another aspect of the present disclosure may include a plurality of secondary battery modules, each according to one aspect of the present disclosure. For example, when assembling a plurality of secondary battery modules with a plurality of frames, a plurality of first current collectors, and a plurality of second current collectors, the plurality of first current collectors are electrically connected to each other via a bus bar (not shown), such that the secondary battery modules are connected to each other in a parallel manner. In this way, the secondary battery may be manufactured.

The secondary battery may operate so as to be charged and discharged via oxidation and reduction of the metal ions dissolved in the electrolyte and may be, for example, a vanadium ion battery.

Hereinafter, the present disclosure will be described in more detail by way of examples. However, following examples are set forth only to describe the present disclosure by way of example, and the present disclosure is not limited to the following examples.

[Preparation Example 1 - Preparation of adhesive]

An acrylic base resin was prepared, and 8 parts by weight of an adhesion promoter and 3 parts by weight of a curing agent were mixed with 100 parts by weight of the acrylic base resin to prepare a total of 100 g of an adhesive in a solution state.

As the acrylic base resin, a resin composition containing an acrylic acid copolymer (2-Propenoic acid, polymer with butyl 2-propenoate, 2-ethylhexyl 2-propenoate and methyl 2-propenoate, CAS No. 98060-25-4); toluene; ethyl acetate; and acetone was used.

When the acrylic base resin is 100% by weight in total, the acrylic acid copolymer is contained at 32% by weight, the toluene is contained at 7% by weight, the ethyl acetate is contained at 58% by weight, and the acetone is contained at 3% by weight.

An acrylic acid copolymer dissolved in ethyl acetate solvent was used as the adhesion promoter, and TETRAD-X (N,N,N',N'-Tetrakis(oxiranylmethyl)-1,3-benzenedimethanamine) was used as the curing agent.

[Preparation Example 2 - Preparation of separator]

m-PBI was added to dimethyl acetamide (DMAC), and was dissolved therein with stirring at a temperature of 160°C and atmospheric pressure for 24 hours to prepare a PBI solution with a solubility of 12% by weight. Then, a PE film (thickness: 20 $\mu$m) was impregnated in the PBI solution and then dried with hot air at a temperature of 50°C for 2 minutes to obtain a separator with a thickness of 27 $\mu$m.

[Experimental example]

(1) Viscosity measurement

A viscosity of the adhesive prepared in Preparation Example 1 was measured at 30 rpm and 30°C using a BM type viscometer, and a measured viscosity was 2200 cps.

(2) Adhesive force measurement

The adhesive prepared in Preparation Example 1 above was applied to a surface of an OPP (oriented poly-propylene) film and was dried for 4 hours. Then, an ABS frame (transverse size 24 mm × longitudinal size 300 mm) was attached to the adhesive on the surface of the OPP (oriented poly-propylene) film. The adhesive force was measured on a peeling force required to peel away the adhesive from the at 180° at a speed of 300 mm/min using UTM (Universal Testing Machine) equipment, and the measured adhesive force was 1850 gf/25mm.
This confirms that the adhesive as prepared in Preparation Example 1 achieves an adhesive force of 1200 gf/25mm or greater, specifically 1200 gf/25mm to 2000 gf/25mm, which is an adhesive force that the existing gasket exhibits relative to the frame.

(3) Airtightness performance test

Each of two current collectors was manufactured by stacking a carbon current collector (graphite composite, thickness: 0.2 mm) and a metal current collector (aluminum foil, thickness: 0.2 mm) on top of each other. The two current collectors were used as a first electrode current collector and a second electrode current collector, respectively. A frame made of ABS (thickness: 15 mm) was prepared, and the adhesive prepared in Preparation Example 1 was applied to each of both opposing surface of the ABS frame, and the two current collectors were attached to the both opposing surfaces of the ABS frame via the adhesives, respectively such that the carbon current collector faced the frame. Then, a cell module including a first electrolyte reservoir and a second electrode electrolyte reservoir formed, by placing the separator as prepared in Preparation Example 2 between the first and second current collectors was manufactured. V$^{3.5+}$ electrolyte solution (manufactured by Standard Energy corporation) at a concentration of 1.7M was supplied to each of the first and second electrode electrolyte reservoir.
Then, the cell module was left in a constant temperature chamber at each of 22°C (room temperature condition), -20°C (low temperature condition), and 50°C (high temperature condition), for 30 days. Then, whether the electrolyte leakage occurred was visually observed. If there was no electrolyte leakage, this was determined as "Pass", and the results are shown in Table 1 below.

[Table 1]

| Temperature condition | After 30 days has elapsed | Determination |
|---|---|---|
| 22°C (room temperature condition) | No electrolyte leakage | Pass |
| -20°C (low temperature condition) | No electrolyte leakage | Pass |
| 50°C (high temperature condition), | No electrolyte leakage | Pass |

(4) Pressurization test - pressure resistance test

Each of two current collectors was manufactured by stacking a carbon current collector (graphite composite, thickness: 0.2 mm) and a metal current collector (aluminum foil, thickness: 0.2 mm) on top of each other. The two current collectors were used as a first electrode current collector and a second electrode current collector, respectively. A frame made of ABS (thickness: 15 mm) was prepared, and the adhesive prepared in Preparation Example 1 was applied to each of both opposing surface of the ABS frame, and the two current collectors were attached to the both opposing surfaces of the ABS frame via the adhesives, respectively such that the carbon current collector faced the frame. Then, a cell module including a first electrolyte reservoir and a second electrode electrolyte reservoir formed, by placing the separator as prepared in Preparation Example 2 between the first and second current collectors was manufactured. $V^{3.5+}$ electrolyte solution (manufactured by Standard Energy corporation) at a concentration of 1.7M was supplied to each of the first and second electrode electrolyte reservoir.

Then, the cell module was pressurized at a pressure of 1 bar, and then a pressure gauge device (SENSYS, SMA model) was installed thereon, and the cell module was left for 30 days. An internal pressure test was conducted by checking how much the pressure changed. In this regard, if an absolute of (the reference pressure (1 bar) - the measured pressure after 30 days)/(the reference pressure) $\times$ 100 % is smaller than 50%. This was determined as "Pass", and the results are shown in Table 1 below.

The above penetration experiment was performed in constant temperature chambers of 22°C (room temperature conditions), -20°C (low temperature conditions), and 50°C (high temperature conditions), respectively, and the results are shown in Table 2 below.

[Table 2]

| Temperature condition | Pressure after 30 days has elapsed | Pressure change | Determination |
|---|---|---|---|
| 22°C (room temperature condition) | 1 bar | 0% | Pass |
| -20°C (low temperature condition) | 0.7 bar | -30% | Pass |
| 50°C (high temperature condition), | 1.3 bar | +30% | Pass |

Although the embodiments of the present disclosure have been described in more detail with reference to the accompanying drawings, the present disclosure is not necessarily limited to the embodiments, and may be modified in a various manner within the scope of the technical spirit of the present disclosure. Accordingly, the embodiments as disclosed in the present disclosure are intended to describe rather than limit the technical idea of the present disclosure, and the scope of the technical idea of an embodiment of the present disclosure is not limited by these embodiments. Therefore, it should be understood that the embodiments described above are not restrictive but illustrative in all respects.

**Claims**

1. A secondary battery module comprising:

   a first current collector;
   a second current collector spaced from the first current collector;
   a separator disposed between the first current collector and the second current collector; and
   a frame defining a first electrode reservoir between the first current collector and the separator and defining a second electrode reservoir between the second current collector and the separator,
   wherein the first current collector and the frame are fixed to each other via a first adhesive member,
   wherein the second current collector and the frame are fixed to each other via a second adhesive member,
   wherein each of the first adhesive member and the second adhesive member includes an adhesive satisfying a following condition (1):

$$\text{Condition (1): } A_i \geq 300 \text{ gf/25mm}$$

   wherein in the condition (1), $A_i$ denotes an adhesive force measured based on a peeling force required to peel off the adhesive from an adhering target by 180° at a speed of 300mm/min.

2. The secondary battery module of claim 1, wherein the adhesive further satisfies a following condition (2):

$$\text{Condition (2): } 100 \text{ cps} \leq V \leq 20{,}000 \text{ cps}$$

   wherein in the condition (2), V denotes a viscosity measured at 30 rpm and 30°C using a BM type viscometer.

3. The secondary battery module of claim 1, or 2, wherein the adhesive further satisfies a following condition (3):

$$\text{Condition (3): } P_{(+)} \geq 0.5\text{bar, and } P_{(-)} \leq -0.5\text{bar}$$

wherein in the condition (3), $P(+)$ and $P_{(-)}$ respectively mean positive and negative pressures under which gas begins to leak from the secondary battery module when the positive pressure and the negative pressure are applied respectively to the secondary battery module obtained by assembling the first current collector, the second current collector, and the frame with each other.

4. The secondary battery module of claim 1, 2, or 3, wherein each of the first adhesive member and the second adhesive member includes at least one of an acrylate-based adhesive, an acrylate-ester-based adhesive, an acrylate-ethylene-based adhesive, a polycarbonate-based adhesive, a polyethylene-based adhesive, an epoxy-based adhesive, and an isocyanate-based adhesive.

5. The secondary battery module of any one of claims 1 to 4, wherein each of the first adhesive member and the second adhesive member includes one of a solvent-type adhesive, an emulsion-type adhesive, a hot melt-type adhesive, a liquid-curable type adhesive, and a film-type adhesive, or a combination thereof.

6. The secondary battery module of any one of claims 1 to 5, wherein the first current collector includes a first metal current collector and a first carbon current collector disposed between the first metal current collector and the frame,

   wherein the second current collector includes a second metal current collector and a second carbon current collector disposed between the second metal current collector and the frame,
   wherein the first carbon current collector and the second carbon current collector are fixed to the frame via the first adhesive member and the second adhesive member, respectively.

7. The secondary battery module of claim 6, wherein the first adhesive member and the second adhesive member are applied or adhered to edges of the first carbon current collector and the second carbon current collector, respectively, and thus are fixed to the frame.

8. The secondary battery module of any one of claims 1 to 7, wherein the first adhesive member is adhered to one side in an out-of-plane direction of the frame,
   wherein the second adhesive member is adhered to the other side in the out-of-plane direction of the frame.

9. The secondary battery module of any one of claims 1 to 8, wherein each of the first adhesive member and the second adhesive member is formed in a closed ring shape.

10. The secondary battery module of any one of claims 1 to 9, wherein the frame is formed in a hollow rectangular shape, wherein each of the first adhesive member and the second adhesive member is formed in a strip shape and is disposed so that an edge thereof coincides with an edge of the frame.

11. The secondary battery module of any one of claims 1 to 10, further comprising a communication channel fluid-communicating the first electrode reservoir and the second electrode reservoir with each other.

12. The secondary battery module of claim 11, wherein the communication channel has at least a portion defined by the first adhesive member and the frame or the second adhesive member and the frame.

13. The secondary battery module of any one of claims 1 to 12, wherein the secondary battery module furthers comprise a first solid electrode disposed in the first electrode reservoir and impregnated with the first liquid electrode, a second solid electrode disposed in the second electrode reservoir and impregnated with the second liquid electrode, and the first solid electrode and the second solid electrode are disposed in the frame.

14. A secondary battery including a plurality of secondary battery modules, each module including the secondary battery module of any one of claims 1 to 13.

15. The secondary battery of claim 14, wherein the secondary battery operates by oxidation and reduction of redox couple dissolved in the electrolyte of the liquid electrode, wherein, preferably, the redox couple is a vanadium redox couple.

FIG. 1

FIG. 2

FIG. 3

FIG. 4

**REFERENCES CITED IN THE DESCRIPTION**

**Patent documents cited in the description**

- KR 1020220190750

- KR 1020230191889

**Non-patent literature cited in the description**

- *CHEMICAL ABSTRACTS,* 98060-25-4